Europäisches Patentamt

European Patent Office

Office européen des brevets

(11) Publication number: **0 427 240 A2**

# EUROPEAN PATENT APPLICATION

(21) Application number: 90121318.1

(22) Date of filing: 07.11.90

(51) Int. Cl.5: **G06F 15/40**

(30) Priority: 07.11.89 JP 289647/89

(43) Date of publication of application:
15.05.91 Bulletin 91/20

(84) Designated Contracting States:
DE FR GB

(71) Applicant: SHARP KABUSHIKI KAISHA
22-22 Nagaike-cho Abeno-ku
Osaka 545(JP)

(72) Inventor: Asahi, Takeoki
2249 Kami-machi, Ikoma-shi
Nara-ken(JP)

(74) Representative: TER MEER - MÜLLER -
STEINMEISTER & PARTNER
Mauerkircherstrasse 45
W-8000 München 80(DE)

(54) Character string retrieving apparatus.

(57) A character string retrieval apparatus includes input device (11) for inputting a retrieval condition in an ambiguous expression, table storage device (16) for storing a plurality of retrieval condition conversion tables, and interpret device (15) for interpreting the retrieval condition being input to the input device and for selecting a retrieval condition conversion table according to the interpreted result from the retrieval condition conversion tables stored in the table storage device (16). The apparatus further includes producing device (17) for producing a practical real retrieval condition according to the retrieval condition conversion table selected by the input condition interpret device and to the interpreted retrieval condition, and processing device (14) for retrieving a character string according to the real retrieval condition obtained by the producing device from a character string group which has been stored.

*Fig. 1*

EP 0 427 240 A2

## CHARACTER STRING RETRIEVING APPARATUS

### BACKGROUND OF THE INVENTION

#### 1. Field of the Invention

The present invention relates to a character string retrieving apparatus for inputting an ambiguously and naturally conceived retrieval condition as input information and for obtaining a corresponding character string.

#### 2. Description of the Related Art

A character string retrieval apparatus normally has an input device for inputting a retrieval condition, a storage device for storing a great deal of character string data as a character string group, an output device such as a CRT display for outputting a character string which is output from the storage device, and a processing device for executing and controlling various processes which read a character string according to the input retrieval condition from the storage device and send the resultant data to the output device. When a character string is retrieved, both or either the retrieval start point or the retrieval end point is input from the input device as the retrieval condition. The processing device searches the storage device for the character string according to the retrieval condition, retrieves it, and then outputs it to the output device.

Then, a retrieval operation for designating the date on which a particular character string group was made will be described in the following. When a character string which was stored at n4 hours, n3 minutes, and n2 seconds on n2 months, n3 days, and n1 years, it is necessary to specifically designate the retrieval condition from the input device, for example, "from n2 months, 3a days, n1 years to n2 months, 3b days, n1 years". In addition, when such a retrieval condition is input, the operator should know the relationship of $n3a \leq n3 \leq n3b$.

Thus, the operator should designate and input a particular character string group "from n2 months, n3a days, n1 years to n2 months, 3b days, n1 years" while considering the relationship of $n3a \leq n3 \leq n3b$. Thus, since the operator should precisely input each character string while considering such relationship, he or she should have much concentration on it. In addition, the desired range may not be input. In other words, the conventional character string retrieval apparatus requires the operator to have the storage performance and flexibility to the retrieval operation as preconditions. Moreover, in the conventional character string retrieval apparatus, a character string in an ambiguous expression cannot be retrieved.

### SUMMARY OF THE INVENTION

Therefore, an object of the present invention is to provide a character string retrieval apparatus for searching, retrieving, and outputting a correct character string according to an ambiguously and naturally conceived retrieval condition.

According to the present invention, the above object is accomplished by a character string retrieval apparatus including input device for inputting a retrieval condition in an ambiguous expression, table storage device for storing a plurality of retrieval condition conversion tables, and interpret device for interpreting the retrieval condition being input to the input device and for selecting a retrieval condition conversion table according to the interpreted result from the retrieval condition conversion tables stored in the table storage device. The apparatus further includes producing device for producing a practical real retrieval condition according to the retrieval condition conversion table selected by the input condition interpret device and to the interpreted retrieval condition, and processing device for retrieving a character string according te the real retrieval condition obtained by the producing device from a character string group which has been stored.

An ambiguously and naturally conceived retrieval condition is interpreted by the input condition interpret device. A retrieval condition table is selected by the retrieval condition and interpreted result. According to the retrieval condition table, a practical and specific real retrieval condition is produced. The processing device selects a character string according to the real retrieval condition from the character string group in the storage device and outputs the resultant data to the output device. Thus, a mental processing operation such as an operation for setting the range of an input retrieval condition by the operator is not reduced. By inputting only numeric values and/or character strings of ambiguous retrieval conditions, desired character strings can be searched, retrieved, and output.

Further objects and advantages of the present invention will be apparent from the following description of the preferred embodiments of the invention as illustrated in the accompanying drawings.

## BRIEF DESCRIPTION OF THE DRAWINGS

FIG. 1 is a schematic showing the structure of a preferred embodiment of a character string retrieval apparatus according to the present invention;

FIG. 2 is a flow chart showing a program of the character string retrieval apparatus of the embodiment of FIG. 1; and

FIGS. 3 to 7 are retrieval condition menus on a display device.

## DESCRIPTION OF THE PREFERRED EMBODIMENTS

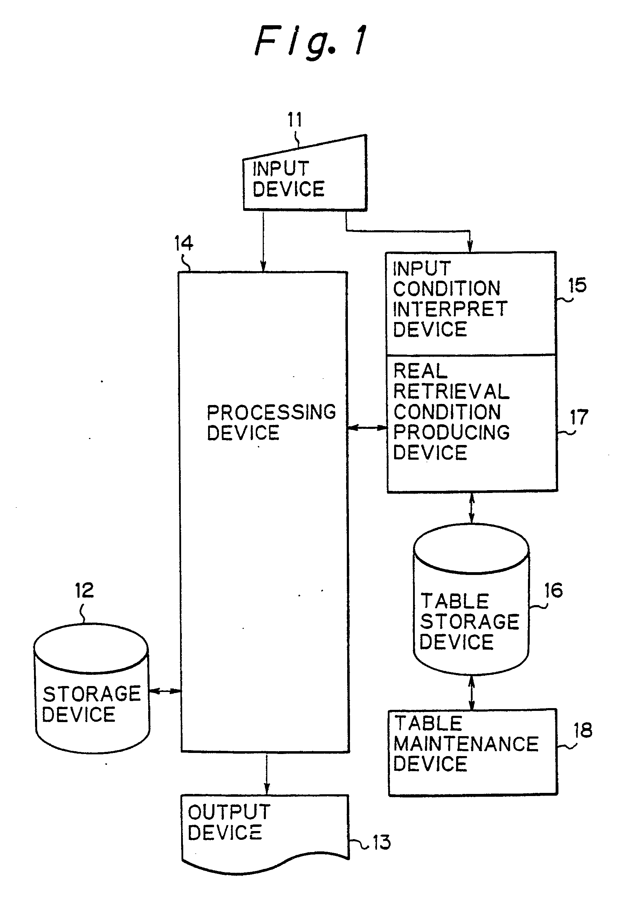

FIG. 1 is a schematic showing the structure of a preferred embodiment of a character string retrieval apparatus according to the present invention. In the figure, numeral 11 is an input device; numeral 12 is a storage device for storing a great deal of character string data as a character string group; numeral 13 is an output device such as a CRT display for outputting a character string being read from the storage device 12. The input device 11, the storage device 12 and the output device 13 are connected to a processing device 14 such as a microprocessor.

An input condition interpret device 15 for interpreting the ambiguously and naturally conceived retrieval condition being input to the input device 11 is connected to the input device 11. The input contition interpret device 15 is connected to a table storage device 16 for storing a plurality of retrieval condition conversion tables and to a real retrieval condition producing device 17. The input condition interpret device 15 selects a retrieval condition conversion table which accords with the interpreted result of the retrieval condition being input from the table storage device 16 and sends the resultant data to the real retrieval condition producing device 17. The real retrieval condition producing device 17 converts and produces a plurality of specific and real retrieval conditions according to the interpreted retrieval condition and the selected retrieval condition conversion table.

A table maintenance device 18 is connected to the table storage device 16, the table maintenance device 18 conducting maintenance operations (namely, addition, correction, deletion, etc.) of the retrieval condition conversion table and/or the real retrieval condition when an ambiguous word and/or phrase newly takes place.

For example, the content of each retrieval condition conversion table stored in the table storage device 16 is as follows.

About X → X - 5, X + 5

X before → (present date / time) - X (1), ... (Present date / time) - X (n)

X after → (present date / time) - X (1), ... (Present date / time) - X (n)

.... X area → y (1), ... , y (n)

The retrieval condition conversion table of the above "About X → X - 5, X + 5" is a table applicable for a retrieval condition in an ambiguous expression such as nearly "X", approx. "X", about "X", around "X", almost "X". When the operator designates "About 5", the input condition interpret device 15 selects the retrieval condition conversion table. The real retrieval condition producing device 17 uses this table and develops the retrieval condition in ambiguous expression into "5 - 5, 5 + 5", namely "0, 10", where "0, 10" represents a value ranging from 0 to 10. The retrieval condition conversion table may be a numeric value conversion table with respect to a time or other than time. In addition, the retrieval condition conversion table may be a conversion table with respect to elements other than numeric values.

When "X" is a date format (YY/MM/DD) , it is computed as a date. For example, when "X" is "About 90/07/01", it is developed from "(90/07/01) - 5, (90/07/01) + 5" into "90/06/25, 90/07/06", where "90/06/25, 90/07/06" means a period from June 25, 1990 to July 6, 1990. In addition, the retrieval condition conversion table of "X before→ ..." is a table applicable for a retrffleval condition in ambiguous expression such as before "X" days or before "X" hours. When the operator designates "7 before" in the date column, the input condition interpret device 15 selects this retrieval condition conversion table. The real retrieval condition producing device 17 uses the table and develops the designated data into "the date before 7 days from the present date".

The retrieval condition conversion table of "X after→ ..." Is a table applicable for a retrieval condition in ambiguous condition such as after "X" days or after "X" hours. When the operator designates "8 after" in the date column, the input condition interpret device 15 selects this retrieval condition conversion table. The real retrieval condition producing device 17 uses the table and develops the designated data into "the date after 8 days from the present date".

The retrieval condition conversion table of "X area→ y (1), ... , y (n) " is a table applicable for designating a retrieval condition in ambiguous expression with respect to a geographic area. "x area" may be "hokkaido area", "tohoku area", "kanto area", chubu area", "kinki area", "chuugoku area", "kyushyu area", etc. When the operator designates the "kinki area", the input condition interpret device 15 selects this retrieval condition conversion table. The real retrieval condition producing device 17 uses the table and develops the designated data into "y (1), ..., y (n) ", namely "osaka, kyoto, nara, wakayama, mie, hyougo, siga".

The retrieval condition table may be any conversion table with respect to various retrieval conditions other than the aforementioned tables.

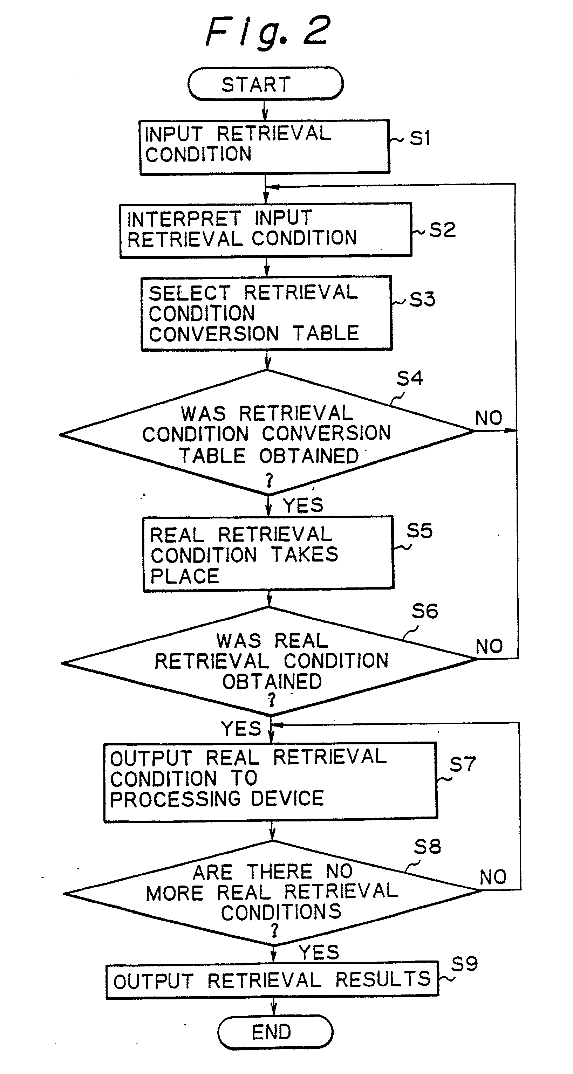

Then, by referring to a flow chart shown in FIG. 2, the operation of the apparatus for retrieving character string according to the present invention will be described in the following.

First, in step S1, an ambiguously and naturally conceived retrieval condition is input through the input device 11. Then, in step S2, the content of the retrieval condition is interpreted by the input condition interpret device 15. In step S3, a retrieval condition conversion table according to the interpreted' result is selected in the table storage device 16.

Then, in step S4, it is determined whether or not the most suitable retrieval condition conversion table was selected in the step S3. When the most suitable retrieval condition conversion table was.selected, the flow is advanced to step S5. In the step S5, a plurality of practical real retrieval conditions in accordance with the interpreted retrieval condition and the retrieval condition conversion table are produced in the real retrieval condition producing device 17.

Then, in step S6, it is determined whether or not real retrieval conditions were obtained. When the real retrieval conditions were obtained, the flow is advanced to step S7. In the step S7, the real retrieval conditions are successively output to the processing device 14.

Thus, the processing device 14 extracts a character string in common with each real retrieval condition or in accordance with one of the real retrieval conditions from the storage device 12. The extracted character string is output to the output device 13 so as to display and print out it.

After that, the flow is advanced to step S8. In the step S8, it is determined whether or not the real retrieval conditions were output. When they were output, the flow is advanced to step S9. In the step S9, the retrieved result is output and the process is completed. On the other hand, when the real retrieval conditions were not output, the flow is returned back to the step S7 and the processes following the step 7 are repeated.

When it is determined that the retrieval condition conversion table was not obtained in the step S4 or that the real retrieval conditions were not obtained in the step S6, the flow is returned back to the step S2. In the step 2, the interpretation of the retrieval condition, the selection of the retrieval condition conversion table, and so forth are repeated.

When an ambiguous and unspecific word and/or phrase newly takes place, the table maintenance device 18 adds, corrects, and/or deletes a retrieval condition conversion table and real retrieval conditions of the table storage device 16. By adding and/or correcting them, the most suitable character string according to the new input retrieval condition which is ambiguously and naturally conceived can be extracted and output.

Then, by using a practical retrieval condition, the present embodiment will be described in detail.

(A) Retrieval by designating the date and time of which a character string group was created

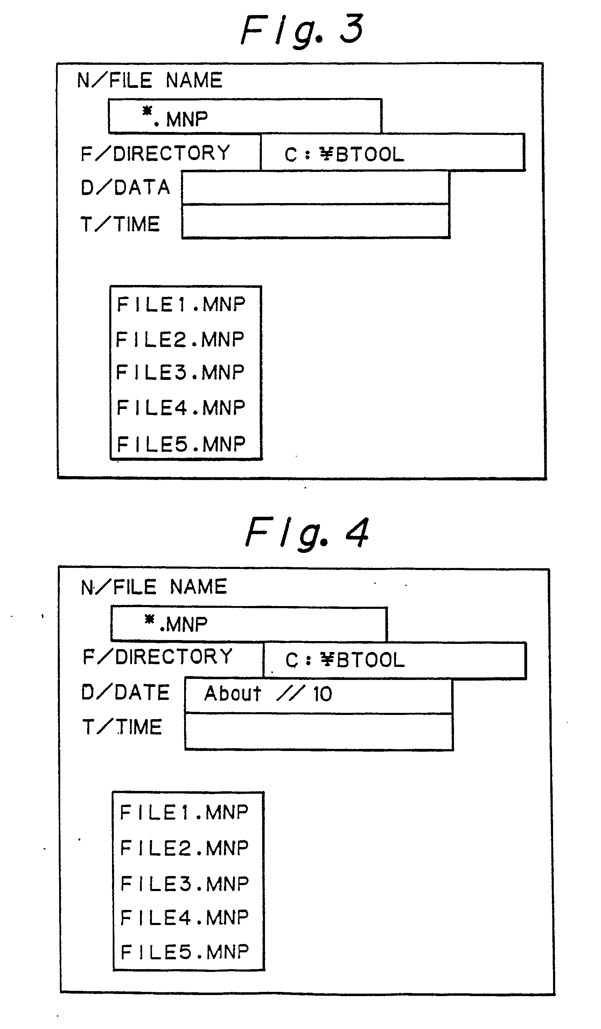

When a file of a spread sheet' software package, a word-processing software package, or the like is searched by designating a date, it is possible to designate a file name (N/FILE NAME) a drive/directory name (F/DIRECTORY) , a file creation date (D/DATE) , a file creation time (T/TIME) and so forth. FIG. 3 shows a file retrieval condition menu on a display screen. In the figure, a file name . MNP" and a drive/directory name "C:\YBTOOL" are designated.

The date and the time are designated as (YY/MM/DD, namely, years/months/days) and (HH/MM/SS, namely, hours/minutes/seconds), respectively. The date and the time are designated in the format of "start date/time, end date/time". When the date value and/or the time value is omitted, the present date value and/or time value is automatically designated. For example, when "//12" is input, "90/07/12" is automatically designated.

Now, assume that in order to search files created on "around July 10", a retrieval condition "About //10" is input in the D/DATE column through the input device 11 as shown in FIG. 4.

In the input character string "About //10", the year value and the month value are omitted. Thus, the processing device 14 processes the input character string assuming that the character string "About 90/07/10" is input on the date of July 10, 1990, on which the character string is input. The processed character string is sent to the input condition interpret device 15.

The input condition interpret device 15 successively compares the input character string with each retrieval condition conversion table in the table storage device 16. The input condition interpret device 15 determines that the retrieval condition conversion table "About X" accords with the input character string and sends this retrieval condition conversion table to the real retrieval condition producing device 17. The real retrieval condition producing device 17 substitutes the day value 10 into "X" of "About X" and develops "(90/07/10) - 5, (90/07/10) + 5" into "90/07/05, 90/07/15". The real retrieval condition producing device 17 sends the resultant data to the processing device 14. Thus, the processing device 14 searches files created from July 5, 1990 to July 15, 1990.

As described above, even if an input retrieval condition for designating a creation date and a creation time of a character string group is ambiguously and naturally conceived, for example, "around July 10", the retrieval condition which is sent to the processing device 14 becomes a specific and practical retrieval condition, such as "from July 5, 1990 to July 15, 1990".

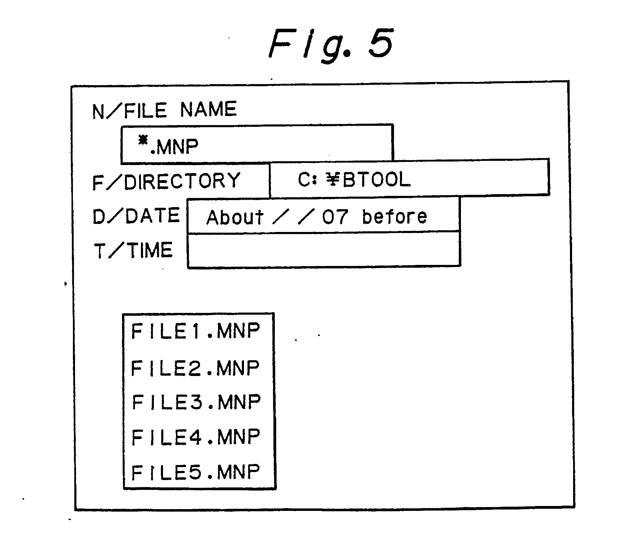

Then, assume that in order to search files created "about 7 days before", a retrieval condition "About //07 before is input in the D/DATE column through the input device 11 as shown in FIG. 5.

In the input character string "About //07 before", the year value and the month value are omitted. Thus, the processing device 14 processes the input character string assuming that the character string "About 90/07/07 before" is input on the date of July 10, 1990, on which the character string is input. The processed character string is sent to the input condition interpret device 15.

The input condition interpret device 15 successively compares the input character string with each retrieval condition conversion table in the table storage device 16. The input condition interpret device 15 determines that the retrieval condition conversion tables "About X" and "X before" accord with the input character string and sends the retrieval condition conversion tables to the real retrieval condition producing device 17. The real retrieval condition producing device 17 substitutes the day value 7 into "X" of "About X" and develops "(90/07/07) - 5, (90/07/07) + 5 before" into "90/07/02, 90/07/12 before". Then, the real retrieval condition producing device 17 develops" (90/07/02) - (90/07/10), (90/07/12) - (90/07/10)" into "90/06/22, 90/07/02" by using the date "90/07/10", on which the character string is input. The resultant data is returned back to the processing device 14. Thus, the processing device 14 searches files created from June 22, 1990 to July 2, 1990.

As described above, even if an input retrieval condition for designating a creation date and a creation time of a character string group is ambiguously and naturally conceived, for example, "about 7 days before", the retrieval condition which is sent to the processing device 14 becomes a specific and practical retrieval condition, such as "from June 22, 1990 to July 7, 1990".

(B) Retrieval of geographical area

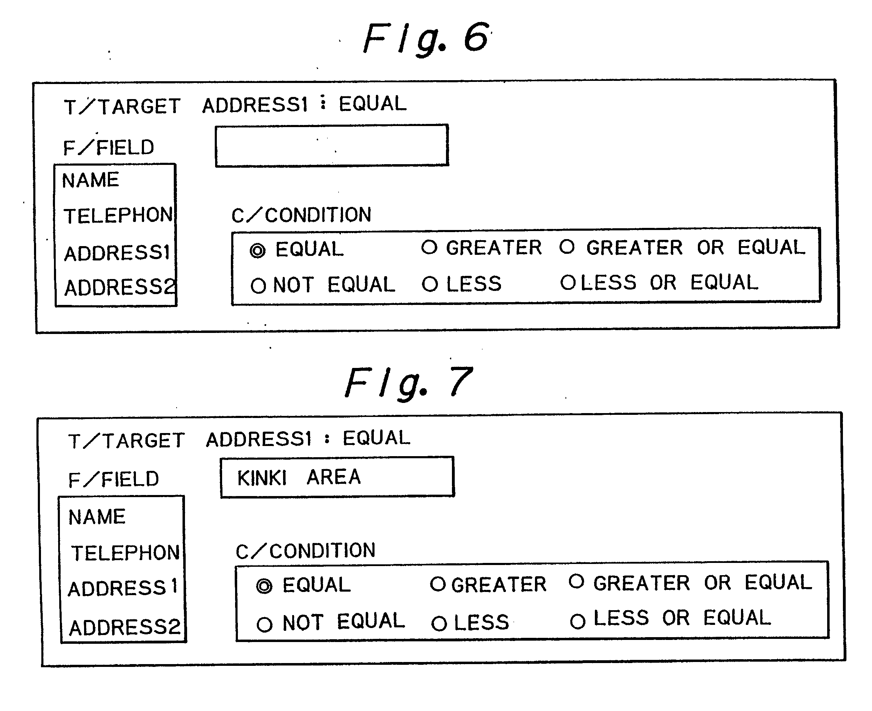

A card type address directory database has columns of name (NAME) , telephone number (TELEPHONE), address 1 (ADDRESS1), and address 2 (ADDRESS2), each of which can be designated as a retrieval key item. FIG. 6 shows a retrieval condition menu on a display screen of a card type address directory. In the figure, the target (T/TARGET) column represents a. retrieval key item and retrieval condition (C/CONDITION) being selected at present. In the figure, a retrieval condition "EQUAL" is selected. The field (F/FIELD) column represents key words being input for retrieval. The retrieval conditions are "equal", "not equal", "greater", "less", "greater or equal", "less or equal", and so forth. For example, when a character string "OSAKA" is input to the F/FIELD column, all data of residents who live in Osaka-fu is searched.

Now, assume that in order to search data of residents who live in "kinki area", a character string "KINKI AREA" is input in the F/FIELD column through the input device 11 as shown in FIG. 7.

The input condition interpret device 15 successively compares the input character string "KINKI AREA" with each retrieval condition conversion table in the table storage device 16 and detects the retrieval condition conversion table "X area" which accords with the input character string. After that, the input condition interpret device 15 sends this retrieval condition conversion table to the real retrieval condition producing device 17. The real retrieval condition producing device 17 develops the real retrieval condition into "osaka, kyoto, nara, wakayama, mie, hyougo, siga". The real retrieval condition producing device 17 sends the resultant data to the processing device 14. Thus, the processing device 14 searches data of residents who live in each prefecture of "osaka, kyoto, nara, wakayama, mie, hyougo, siga".

As described above, even if an input retrieval condition for designating an area of a character string group is ambiguously and naturally conceived, for example, "KINKI AREA", the retrieval condition which is sent to the processing device 14 becomes a specific and practical retrieval condition, such as "osaka, kyoto, nara, wakayama, mie, hyougo, siga".

Many widely different embodiments of the present invention may be constructed without departing from the spirit and scope of the present invention. It should be understood that the present invention is not limited to the specific embodiments described in the specification, except as defined in the appended claims.

## Claims

1. An apparatus for retrieving character string comprising:
input means (11) for inputting a retrieval condition in an ambiguous expression;

table storage means (16) or storing a plurality of retrieval condition conversion tables;

interpret means (15) for interpreting the retrieval condition being input to said input means and for selecting a retrieval condition conversion table according to the interpreted result from the retrieval condition conversion tables stored in said table storage means;

producing means (17) for producing a practical real retrieval condition according to the retrieval condition conversion table selected by said input condition interpret means and to the interpreted retrieval condition; and

processing means (14) or retrieving a character string according to the real retrieval condition obtained by said producing means from a character string group which has been stored.

2. An apparatus for retrieving character string as claimed in claim 1, wherein said table storage means includes table storage means for storing a retrieval condition conversion table which converts a retrieval condition in an ambiguous expression into a retrieval condition expressed by "from -- to".

3. An apparatus for retrieving character string as claimed in claim 2, wherein said table storage means includes table storage means for storing a retrieval condition conversion table which converts a retrieval condition "about" in an ambiguous expression into a retrieval condition expressed by "from -- to".

4. An apparatus for retrieving character string as claimed in claim 1, wherein said table storage means includes table storage means for storing a retrieval condition conversion table which converts a retrieval condition with respect to a time in an ambiguous expression into a retrieval condition expressed by "from -- to".

5. An apparatus for retrieving character string as claimed in claim 4, wherein said table storage means includes table storage means for st oringa ret rieval co n-dition con versi on tablewhich converts a retrieval condition "before" in an ambiguous expression into a retrieval condition expressed by "from -- to".

6. An apparatus for retrieving character string as claimed in claim 4, wherein said table storage means includts table storage means for storing a retrieval condition conversion table which converts a retrieval condition "after" in an ambiguous expression into a retrieval condition expressed by "from -- to".

7. An apparatus for retrieving character string as claimed in claim 4, wherein said table storage means includes table storage means for storing a retrieval condition conversion table which converts a retrieval condition "about" in an ambiguous expression into a retrieval condition expressed by "from -- to".

8. An apparatus for retrieving character string as claimed in claim 4, wherein said processing means includes processing means for compensating an omitted portion of a retrieval condition in an ambiguous expression with respect to a time being input by using the present date and the present time.

9. An apparatus for retrieving character string as claimed in claim 1, wherein said table storage means includes table storage means for storing a retrieval condition table which converts a retrieval condition in an ambiguous expression into a predetermined retrieval condition with a plurality of items.

10. An apparatus for retrieving character string as claimed in claim 9, wherein said table storage means includes table storage means for storing a retrieval condition table which converts a retrieval condition in an ambiguous expression with respect to a geographic area into a predetermined retrieval condition with a plurality of items.

11. An apparatus for retrieving character string as claimed in claim 1, wherein said apparatus further comprises table maintenance means for adding, correcting, and deleting the retrieval condition conversion tables stored in said table storage means.

# F I g. 1

# Fig. 2

```
        START

  INPUT RETRIEVAL          ~S1
  CONDITION

  INTERPRET INPUT          ~S2
  RETRIEVAL CONDITION

  SELECT RETRIEVAL         ~S3
  CONDITION
  CONVERSION TABLE

        WAS RETRIEVAL              S4
  CONDITION CONVERSION   ——→ NO
     TABLE OBTAINED
            ?
          YES

  REAL RETRIEVAL           S5
  CONDITION TAKES
  PLACE

        WAS REAL                   S6
  RETRIEVAL CONDITION   ——→ NO
        OBTAINED
            ?
          YES

  OUTPUT REAL RETRIEVAL    S7
  CONDITION TO
  PROCESSING DEVICE

        ARE THERE NO               S8
  MORE REAL RETRIEVAL   ——→ NO
       CONDITIONS
            ?
          YES

  OUTPUT RETRIEVAL RESULTS  ~S9

         END
```

# Fig. 3

```
N/FILE NAME
    ┌──────────────────────────┐
    │   *.MNP                   │
    └──────────────────────────┘
F/DIRECTORY      ┌──────────────────┐
                 │  C:¥BTOOL        │
D/DATA     ┌─────┴──────────────────┤
           │                        │
T/TIME     ├────────────────────────┤
           │                        │
           └────────────────────────┘

      ┌─────────────────┐
      │ FILE1.MNP       │
      │                 │
      │ FILE2.MNP       │
      │                 │
      │ FILE3.MNP       │
      │                 │
      │ FILE4.MNP       │
      │                 │
      │ FILE5.MNP       │
      └─────────────────┘
```

# Fig. 4

```
N/FILE NAME
    ┌──────────────────────────┐
    │   *.MNP                   │
    └──────────────────────────┘
F/DIRECTORY      ┌──────────────────┐
                 │  C:¥BTOOL        │
D/DATE     ┌─────┴──────────────────┤
           │ About // 10            │
T/TIME     ├────────────────────────┤
           │                        │
           └────────────────────────┘

      ┌─────────────────┐
      │ FILE1.MNP       │
      │                 │
      │ FILE2.MNP       │
      │                 │
      │ FILE3.MNP       │
      │                 │
      │ FILE4.MNP       │
      │                 │
      │ FILE5.MNP       │
      └─────────────────┘
```

# Fig. 5

N/FILE NAME

> *.MNP

F/DIRECTORY | C: ¥BTOOL

D/DATE | About / / 07 before

T/TIME |

FILE1.MNP
FILE2.MNP
FILE3.MNP
FILE4.MNP
FILE5.MNP

## Fig. 6

T/TARGET   ADDRESS1 : EQUAL

F/FIELD

| NAME |
| TELEPHON |
| ADDRESS1 |
| ADDRESS2 |

C/CONDITION

◉ EQUAL        ○ GREATER    ○ GREATER OR EQUAL
○ NOT EQUAL   ○ LESS       ○ LESS OR EQUAL

## Fig. 7

T/TARGET   ADDRESS1 : EQUAL

F/FIELD     KINKI AREA

| NAME |
| TELEPHON |
| ADDRESS1 |
| ADDRESS2 |

C/CONDITION

◉ EQUAL        ○ GREATER    ○ GREATER OR EQUAL
○ NOT EQUAL   ○ LESS       ○ LESS OR EQUAL

EP 0 427 240 A2